Europäisches Patentamt

European Patent Office

Office européen des brevets

(19)

(11) Numéro de publication: **0 308 290**
**A1**

(12)

# DEMANDE DE BREVET EUROPEEN

(21) Numéro de dépôt: 88402192.4

(22) Date de dépôt: 30.08.88

(51) Int. Cl.⁴: **C 08 K 3/38**
C 08 J 5/24

(30) Priorité: 15.09.87 FR 8712777

(43) Date de publication de la demande:
**22.03.89 Bulletin 89/12**

(84) Etats contractants désignés:
**AT BE CH DE ES FR GB GR IT LI LU NL SE**

(71) Demandeur: **CECA S.A.**
**22, place des Vosges**
**F-92400 Courbevoie (FR)**

(72) Inventeur: **Dreyfus, Thierry**
**11, allée d'Olinval Domaine de Rimberlieu**
**F-60140 Villiers sur Coudun (FR)**

(54) **Nouvelles compositions de résines formo-phénoliques pour préparation de mats préimprégnés.**

(57) On formule des compositions d'imprégnation pour la préparation de mats préimprégnés, par addition à des résines formo-phénoliques aqueuses de type résol d'un agent d'épaississement constitué de borates de zinc ou de manganèse ou de produits apparentés. La viscosité de ces compositions, initialement assez fluides, évolue assez rapidement pour que les mats préimprégnés développent une consistance convenable pour leur stockage et leur manipulation, tout en restant aptes au formage et au durcissement définitif par pressage à chaud.

EP 0 308 290 A1

**Description**

# NOUVELLES COMPOSITIONS DE RESINES FORMO-PHENOLIQUES POUR PREPARATION DE MATS PREIMPREGNES

La présente invention a trait à des compositons de résines phénoliques perfectionnées convenant particulièrement à la préparation de mats préimprégnés.

Les mats préimprégnés sont des demi-produits destinés à la fabrication de pièces en composites de résines thermodurcies par pressage à chaud.

Ces mats préimprégnés se présentent généralement en plaques ou en boudins constitués de résines thermodurcissables, de matériaux de renfort, fibres coupées, mats ou rovings, et le cas échéant, de charges et de pigments. Ces demi-produits doivent être suffisamment consistants pour pouvoir être manipulés, mais néanmoins offrir une malléabilité et une souplesse suffisantes pour pouvoir épouser les contours du moule dans lequel ils seront mis en forme et définitivement thermodurcis. Mais de plis, ils doivent rester stables au stockage, c'est-à-dire ne pas laisser fuir la résine, ni durcir par évolution due à la polymérisation spontanée et incontrôlée de cette résine.

On en connaît plusieurs voies d'obtention.

1) Imprégnation d'un support par une résine liquide, éliminationdu solvant par chaufffage avec mûrissement de la résine au cours de cette évaporation l'amenant à un stade évolué de viscosité, mais auquel elle reste encore thermodurcissable.

Les mats que l'on obtient ainsi offrent un fluage médiocre sous la presse, et acceptent mal les charges, et leur stockabilité est limitée du fait de l'évolution de la résine dans le temps.

2) Pénétration d'un renfort par une résine en poudre, par exemple une novolaque phénolique avec son durcisseur hexaméthylènetétramine, compactage sous pression à une température suffisante pour ramollir la résine, mais néanmoins assez basse pour ne pas en entraîner la réticulation complète. Cette méthode est exposée dans le brevet français N° 79 20559. Les demi-produits ainsi obtenus ont un bon fluage sous la presse, et une très longue durée de stockage, mais ils ont l'inconvénient de fournir des plaques fragiles qui supportent mal les manutentions nécessaires à leur approvisionnement, leur magasinage et leur mise sous presse.

3) Imprégnation d'un renfort avec une composition de résine comprenant la résine thermodurcissable, les charges et pigments éventuels, et un agent de mûrissement, dont le rôle est de faire croître la viscosité de la résine en environ 48 heures, de façon à ce que le produit semi-fini atteigne la consistance d'une pâte à modeler un peu dure, et conserve cette consistance pendant deux à trois mois. Cette méthode est utilisée pour réaliser des mats à base de résines polyesters, l'agent de mûrissement étant la magnésie.

Les demi-produits correspondants sont d'une excellente ouvrabilité, mais n'ont qu'une durée de vie limitée. Le brevet français N° 84 12277 décrit une méthode de ce type, mettant en oeuvre une résine phénolique avec un agent de mûrissement constitué de métaborates alcalino-terreux. Cet agent de mûrissement alcalinise assez fortement la résine, ce qui inhibe la réticulation ultérieure qui exige un milieu acide, et l'augmentation de pH être compensée par l'introduction de quantités importantes de catalyseur acide. De plus, la forme préférée du métaborate alcalino-terreux est le borate de baryum, et l'introduction des sels de baryum, non dépourvus de toxicité, n'est pas souhaitable.

La présente invention remédie à ces inconvénients. Elle permet de préparer des mats préimprégnés à partir de résines formo-phénoliques atteignant un degré de mûrissement satisfaisant en environ 48 heures, suffisamment stables par la suite et néanmoins réticulables à chaud. Ces résultats sont obtenus de néanmoins réticulables à chaud. Ces résultats sont obtenus de façon tout à fait surprenante par utilisation de borates de zinc ou de manganèse comme agent de mûrissement. L'absence de catalyseur acide est particulièrement appréciable, car ces préparations sont dénuées d'agressivité vis-à-vis du matériel de mise en oeuvre, généralement constitué d'acier inoxydable ou d'acier chromé.

Selon l'invention, on réalise des compositions utilisables pour l'imprégnation de mats en mélangeant des résines aqueuses formo-phénoliques de type résol dont l'extrait sec est au moins de 60% , avec une composition minérale à base de dérivés boriques et de sels ou d'oxydes de zinc ou de manganèse, en quantités comprises entre 5 parties et 80 parties de compositions de borates métalliques pour 100 parties de résine.

L'une des caractéristiques de l'invention est le rapport molaire bore/zinc ou bore/manganèse, qui doit être compris entre 1:4 et 5:1. On peut choisir des borates métalliques industriellement disponibles dont le rapport bore/métal se situe dans l'intervalle désiré, comme par exemple le composé 2 $ZnO$, 3 $B_2O_3$, 3,5 $H_2O$, dont le rapport B/Zn est de 3, ou le composé 2 $Zn(BO_2)_2$, $3H_2O$, dont le rapport B/Zn est de 1.

On peut également obtenir un agent de mûrissement selon l'invention en préparant le borate métallique par action d'un borate alcalin ou alcalino-terreux sur un sel soluble de zinc ou de manganèse (par exemple le sulfate), ou par attaque de l'oxyde ou du carbonate correspondant par l'acide borique ou l'ahnydride borique. Mais il est également possible, et c'est même l'une des formes préférées de l'invention, d'utiliser comme agent de mûrissement borate/métal, une simple association d'acide ou d'anhydride borique avec l'oxyde du métal choisi, dans les proportions nécessaires à la réalisation du rapport molaire souhaité.

Les résines phénoliques qui conviennent particulièrement à l'invention sont des résols obtenus par condensation en phase aqueuse d'un phénol et d'un aldéhyde, et dont l'extrait sec est au moins de 60% pour éviter que les produits finis réticulés n'aient une trop forte porosité. Le phénol à l'origine de ces résols est de préférence l'hydroxybenzène ou phénol ordinaire, auquel peuvent être associés des quantités plus ou moins élevées d'autres phénols tels que les crésols, les xylénols, le bis-phénol A, selon des proportions qui sont connues de l'homme du métier.

Le composant aldéhydique préféré est le formol, mais il peut être fait appel à des mélanges de formol avec d'autres aldéhydes connus de la technique, par exemple l'acétaldéhyde ou le glyoxal.

Les résols sont obtenus par des méthodes connues en soi, par catalyse basique, par exemple en présence de bases alcalines ou alcalino-terreuses, d'amines tertiaires, primaires ou secondaires, d'ammoniaque ou de mélange de ces catalyseurs.

On trouve des compositions d'imprégnation rappelant celles de la présente invention dans le brevet US N° 2 785 144 (Westinghouse Electric Corporation), qui enseigne la façon de réaliser de la pignonnerie par imprégnation de tissus. Il s'agit en l'occurence de résines phénoliques beaucoup plus fluides, ne titrant que de 40 à 60% d'extrait sec, auxquelles on associe des charges de borate de zinc destinées à ignifuger le matériau, et de l'acide citrique, destiné à limiter la décantation d'une telle charge et au contraire de la présente invention, à limiter l'évolution de la viscosité de la composition.

La composition de résine et d'agent de mûrissement selon l'invention s'applique à des renforts qui sont constitués de fils ou fibres, coupés ou en mats, tels que fils de verre coupés, tissus ou mats de fibres de verre, tissus de polyamides, fibres cellulosiques, fibres de carbone.

Elle s'associe aux ingrédients couramment rencontrés pour ce genre de composites, plastifiants, tensio-actifs, agents de démoulage, charges telles que la silice, le kaolin, l'alumine, et si nécessaire à des catalyseurs latents de réticulation, tels l'acide paratoluène-sulfonique.

Les exemples suivants, qui ne sont pas limitatfs, feront mieux comprendre l'invention.

Dans ces exemples, on entend par :

- Extrait sec de la résine formophénolique, le résidu d'évaporation de la résine aqueuse après trois heures en étuve sèche à 135°C, exprimé en poids pour cent;
- Viscosité dynamique, la viscosité mesurée à 23°C, au viscosimètre Brookfield, à 20 tour.min$^{-1}$, et exprimée en pascals-secondes;
- Réactivité de la résine, le résultat du test de plaque à 150°C. L'essai consiste à déposer une goutte de résine sur une plaque chauffante maintenue à 150°C, et à la travailler avec un agitateur, sans pour autant l'étaler au-delà d'un petit cercle de 1,5 cm de diamètre, jusqu'à ce que la résine fondue perde son pouvoir de filer quand on soulève l'agitateur : la réactivité est le temps exprimé en secondes pour que la résine ne file plus dans ces conditions.

On souhaite pour les compositions selon l'invention des viscosités initiales qui soient inférieures à 50 pascals-secondes, de façon à ce qu'un bon mouillage des fibres puisse être réalisé, et des viscosités finales comprises entre $10^4$ et $10^5$ pascals-secondes. Quant aux réactivités selon le test de plaque, il est habituel de retenir celles qui sont inférieures à 30 secondes.

EXEMPLES

Exemple 1

A une résine formo-phénolique (résine A), caractérisée par un rapport molaire formol/phénol de 1,7, un extrait sec égal à 74% , une viscosité initiale de 1 Pa.s, et par une réactivité de plaque à 150°C de 20 secondes, on ajoute des quantités variables d'un borate de zinc caractérisé par un rapport molaire bore/zinc de 3.

L'évolution spontanée de la viscosité est mise en évidence dans le tableau ci-après :

| RESINE A (parties) | 100 | 100 | 100 | 100 |
|---|---|---|---|---|
| BORATE (parties) | 10 | 15 | 20 | 30 |
| Viscosités (Pa.s) | | | | |
| initiale | 1,5 | 1,5 | 1,6 | 1,6 |
| + 1 heure | 2 | 20 | 80 | 100 |
| + 2 heures | 60 | 200 | 400 | 600 |
| + 4 heures | 300 | 650 | 1100 | 1500 |
| + 6 heures | 500 | 1000 | 1500 | 2500 |
| + 1 jour | 2500 | 4500 | 6000 | 22000 |
| + 7 jours | 20000 | 30000 | 35000 | >40000 |
| + 10 jours | >40000 | >40000 | >40000 | |

L'additif provoque un mûrissement d'autant plus rapide que la quantité de borate de zinc est plus élevée, mais la viscosité finale du système est peu sensible aux taux d'additif utilisé.

Exemple 2 (exemple comparatif)

On a comparé ici l'action d'un agent de mûrissement selon l'art antérieur (borate de baryum) à un agent borato-zingué selon l'invention de rapport B/Zn égal à 3. La résine (résine A) est la même que celle de l'exemple précédent.

| | | |
|---|---|---|
| RESINE A (parties) | 100 | 100 |
| ALUMINE (parties) | 40 | 40 |
| BORATE DE ZINC (parties) | 0 | 10 |
| METABORATE DE ZINC | 10 | 0 |
| Viscosité (Pa.s) | | |
| initiale | 6,3 | 3,5 |
| + 1 heure | 290 | 7 |
| + 2 heures | 370 | 300 |
| + 4 heures | 450 | 400 |
| + 6 heures | 600 | |
| + 1 jour | 720 | 3000 |
| + 7 jours | 850 | 40000 |

Dans aucun des cas, le mûrissement n'a conduit à une prise en masse définitive, et le produit est resté apte au moulage. Mais le système borate/zinc permet d'atteindre un mûrissement plus rapide et plus efficace.

Exemple 3

On a procédé comme dans l'exemple 1, mais en remplaçant le borate de zinc par un métaborate de manganèse, de formule $Mn\ (BO_2)_2,\ 2H_2O$.
Le tableau des résultats est le suivant :

| RESINES A | 100 parties |
|---|---|
| METABORATE DE MANGANESE | 20 parties |
| Viscosités (Pa.s) | |
| initiale | 40 |
| + 1 heure | 140 |
| + 4 heures | 500 |
| + 24 heures | 1100 |
| + 3 jours | 3300 |
| + 10 jours | 13000 |

Exemple 4

Dans cet exemple, on a fait varier de façons diverses les proportions relatives de bore et de zinc.

| RESINE A (parties) | 100 | 100 | 100 |
|---|---|---|---|
| BORATE B/Zn=3 (parties) | 15 | 20 | - |
| Borate B/Zn=1 parties) | - | - | 20 |
| ANHYDRIDE BORIQUE (parties) | 5,3 | - | - |
| Viscosités (Pa.s) | | | |
| initiale | 4,5 | 2,1 | 2,2 |
| + 1 heure | 20 | 80 | 4 |
| + 2 heures | 100 | 420 | 5 |
| + 4 heures | 900 | 1100 | 7 |
| + 1 jour | 21000 | 6000 | 100 |
| + 7 jours | 4000 | 35000 | 3000 |

En utilisant uniquement de l'anhydride borique, on obtient un épaississement ; mais après 7 jours, la masse est totalement réticulée et devenue infusible.

Exemple 5

On utilise ici une composition voisine de celle de l'exemple 2, mais l'agent de mûrissement est un mélange de borax et de sulfate de zinc.
On obtient les résultats suivants :

| RESINE A | 100 parties |
|---|---|
| BORAX | 13,5 parties |
| SULFATE DE ZINC | 13,5 parties |
| ALUMINE | 40 parties |
| Viscosités (Pa.s) | |
| initiale | 22,5 |
| + 3 heures | 240 |
| + 5 heures | 400 |
| + 24 heures | 1400 |
| + 48 heures | 4000 |
| + 7 jours | 30000 |

Exemple 6

Dans cet exemple, on a utilisé comme agent de mûrissement diverses compositions à base d'oxyde de zinc et d'acide ou d'anhydride borique. On obtient les résultats ci-après, où les quantités des divers ingrédients sont données en parties en poids, et où les réactivités sont les réactivités à 150°C exprimées en secondes :

| RESINE A | 100 | 100 | 100 | 100 | 100 |
|---|---|---|---|---|---|
| OXYDE DE ZINC | 3,7 | 5,1 | 5,1 | 11,5 | 5,6 |
| $B_2O_3$ | 13,3 | 11,9 | 0 | 0 | 0 |
| ACIDE BORIQUE | 0 | 0 | 21 | 17 | 17 |
| Réactivité | 30 | 18 | 15 | 29 | 19 |
| Viscosités (Pa.s) | | | | | |
| initiale | 15 | 25 | 28 | 20 | 100 |
| + 1 heure | 560 | 680 | 580 | 130 | 120 |
| + 2 heures | 1400 | 30000 | 1500 | 1000 | 380 |
| + 3 heures | 5600 | >40000 | 2500 | 1300 | 900 |
| + 24 heures | >40000 | | 13000 | 12000 | 4500 |
| + 48 heures | | | 18000 | 13000 | 5500 |

Exemple 7

Cet exemple relate des résultats obtenus, d'une part avec une résine (résine B), dont le rapport molaire formol/phénol est égal à 1,2, dont la réactivité à la plaque à 150°C est de 170 secondes, et dont la viscosité est de 1 Pa.s, et d'autre part avec une résine (résine C), dont le rapport molaire formol/phénol est égal à 2, dont la réactivité à la plaque à 150°C est de 130 secondes, et dont la viscosité est de 1,2 Pa.s. Ces deux résines ont un extrait sec de 75%. L'agent d'épaississement est le borate de zinc, de rapport B/Zn égal à 3.

On a obtenu :

| RESINE (parties) | B : 100 | C : 100 |
|---|---|---|
| BORATE (parties) | 25 | 25 |
| Viscosités (Pa.s) | | |
| initiale | 2 | 2 |
| + 1 heure | 50 | 20 |
| + 2 heures | 150 | 90 |
| + 1 jour | 2500 | 5500 |
| + 2 jours | 3000 | 8000 |

Ces exemples montrent que l'on peut formuler un additif de mûrissement très facilement adaptable selon que l'on veut obtenir des formules à évolution plus ou moins rapide. L'épaississement est obtenu sans que la réticulation soit complète et dans tous les cas, le demi-produit reste très facilement formable à la presse et thermodurcissable dans d'excellentes conditions.

Le système oxyde de zinc/anhydride ou acide borique est accessible à partir de produits très courants et n'offrant aucune difficulté ni danger de manipulation. Il constitue un mode préféré de l'invention.

**Revendications**

1. Compositions perfectionnées de résines formophénoliques aptes à la fabrication de préimprégnés par imprégnation de mats de fils ou de fibres, constituées d'une résine aqueuse formophénolique de type résol et d'un agent d'épaississement, caractérisées en ce que la résine aqueuse formophénolique a un extrait sec d'au moins 60% , et en ce que l'agent d'épaississement est une composition minérale contenant du bore sous forme de dérivés boriques et un métal du groupe formé par le zinc et le manganèse sous forme de sels ou d'oxydes dont le rapport molaire du bore au métal est compris entre 1:4 et 5:1.

2. Compositions perfectionnées de résines phénoliques selon la revendication 1, caractérisées en ce que l'agent d'épaississement est un borate de zinc.

3. Compositions perfectionnées de résines phénoliques selon la revendication 1, caractérisées en ce que l'agent d'épaississement est constitué d'un mélange de borate alcalin et d'un sel soluble de zinc.

4. Compositions perfectionnées de résines phénoliques selon la revendication 3, caractérisées en ce que le sel de zinc de l'agent d'épaississement est du sulfate de zinc.

5. Compositions perfectionnées de résines phénoliques selon la revendication 1, caractérisées en ce que l'agent d'épaississement est constitué d'un mélange d'acide ou d'anhydride borique et d'oxyde de zinc.

6. Compositions perfectionnées de résines phénoliques selon la revendication 1, caractérisées en ce que l'agent d'épaississement est un borate de manganèse.

7. Compositions perfectionnées de résines phénoliques selon les revendications 1 à 6, caractérisées en ce que l'agent d'épaississement minéral est présent en quantités comprises entre 5 et 80 pour cent en poids par rapport au résol.

8. Procédé pour l'obtention de composites thermodurcis, comprenant les opérations suivantes :

- préparation de mats préimprégnés constitués principalement de mats de fils ou de fibres, d'une résine d'imprégnation, et de divers additifs, charges ou pigments;
- maturation de ces mats par épaississement spontané et limité de la résine d'imprégnation;

- formage sous presse à chaud;

où la résine d'imprégnation est une composition comprenant une résine aqueuse formophénolique de type résol et un agent d'épaississement, caractérisé en ce que la résine aqueuse formophénolique a un extrait sec d'au moins 60% , et en ce que l'agent d'épaississement est une composition minérale contenant du bore sous forme de dérivés boriques et un métal du groupe formé par le zinc et le manganèse sous forme de sels ou d'oxydes, et dont le rapport molaire du bore au métal est compris entre 1:4 et 5:1.

Office européen
des brevets

**RAPPORT DE RECHERCHE EUROPEENNE**

Numero de la demande

EP 88 40 2192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | US-A-2 785 144 (J.J. WACHTER) <br> * Revendications; colonne 2, lignes 35-43 * <br> --- | 1,2,7,8 | C 08 K 3/38 <br> C 08 J 5/24 |
| Y | US-A-4 113 700 (H.M. CULBERTSON) <br> * Revendications * <br> --- | 1 | |
| D,A | FR-A-2 463 159 (INSTITUT NATIONAL DE RECHERCHE CHIMIQUE APPLIQUEE) <br> --- | | |
| D,A | EP-A-0 176 378 (SOC. CHIM. DES CHARBONNAGES) <br> ----- | | |

DOMAINES TECHNIQUES
RECHERCHES (Int. Cl.4)

C 08 K
C 08 J

*Le présent rapport a été établi pour toutes les revendications*

| Lieu de la recherche | Date d'achèvement de la recherche | Examinateur |
|---|---|---|
| LA HAYE | 14-12-1988 | STIENON P.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P0402)